# EUROPEAN PATENT APPLICATION

(11) **EP 4 144 578 A1**
(43) Date of publication of application: **08.03.2023**
(21) Application number: 21804584.7
(22) Date of filing: 08.05.2021
(51) Int. Cl.: B60L 58/40

(54) **FUEL CELL VEHICLE ENERGY MANAGEMENT METHOD AND SYSTEM, AND VEHICLE**

(30) Priority: 15.05.2020 CN 202010414610
(71) Applicant: Great Wall Motor Company Limited, Baoding, Hebei 071000 (CN)
(72) Inventor: WU, Maiqing, Baoding City, Hebei 071000 (CN); ZHANG, Nan, Baoding City, Hebei 071000 (CN); SONG, Dandan, Baoding City, Hebei 071000 (CN); SONG, Haijun, Baoding City, Hebei 071000 (CN); HAO, Yang, Baoding City, Hebei 071000 (CN); ZHANG, Chaozhi, Baoding City, Hebei 071000 (CN)
(74) Representative: Klunker IP Patentanwälte PartG mbB
(86) International application number: PCT/CN2021/092411
(87) International publication number: WO 2021/227990

(57) **Abstract**

A method and system for managing energy of a fuel cell vehicle and a vehicle. The method is applied to a vehicle including a fuel cell, the vehicle further includes a power battery and a motor, the fuel cell and the power battery are electrically connected to the motor, and the method includes: acquiring a required power of the vehicle, a rated output power of the fuel cell and a current energy efficiency of the power battery; and according to at least one of the required power, the rated output power and the current energy efficiency, controlling the power battery to operate, and controlling the fuel cell to supply electric power at the rated output power or stop supplying electric power. In the present disclosure, not only the power battery can operate in the state of a reasonable energy efficiency to the largest extent, but also the fuel cell can always be in the two states of operating at the rated output power or of stopping operating, which prevents the problem that the fuel cell frequently operates at a non-rated output power, which results in a low economic efficiency of the hydrogen fuel and affects the economic efficiency of the entire vehicle.

## Description

### CROSS REFERENCE TO RELEVANT APPLICATIONS

The present disclosure claims the priority of the Chinese patent application filed on May 15^{th}, 2020 before the China Patent Office with the application number of 202010414610.1 and the title of "FUEL CELL VEHICLE ENERGY MANAGEMENT METHOD AND SYSTEM, AND VEHICLE", which is incorporated herein in its entirety by reference.

### TECHNICAL FIELD

The present disclosure relates to the technical field of new-energy vehicles, and particularly relates to a method and system for managing energy of a fuel cell vehicle, and a vehicle.

### BACKGROUND

Currently, with the increasingly serious global environmental problem, new-energy vehicles have been rapidly developed.

Fuel cell vehicles, as green environmental protection new-energy vehicles, use a fuel cell as the primary power device, and use a power battery as an auxiliary power device, to realize an excellent energy allocation, thereby obtaining the dual effects of an optimized driving performance and an optimized economic efficiency with a low energy and a high efficiency.

However, in existing fuel cell vehicles, during the travelling, the fuel cell is always in the operating state, and therefore the fuel cell is frequently within a non-optimum operation interval; in other words, the fuel cell is frequently within an operation interval of a non-rated output power, which results in a low economic efficiency of the hydrogen fuel and affects the economic efficiency of the entire vehicle.

### SUMMARY

In view of the above, the present disclosure provides a method and system for managing energy of a fuel cell vehicle and a vehicle, to solve the problem of existing fuel cell vehicles that the fuel cell frequently operates at a non-rated output power, which results in a low economic efficiency of the hydrogen fuel and thus affects the economic efficiency of the entire vehicle.

In order to achieve the above object, the technical solutions of the present disclosure are realized as follows:

A method for managing energy of a fuel cell vehicle, wherein the method is applied to a vehicle including a fuel cell, the vehicle further includes a power battery and a motor, the fuel cell and the power battery are electrically connected to the motor, and the method includes:
acquiring a required power of the vehicle, a rated output power of the fuel cell and a current energy efficiency of the power battery; and
according to at least one of the required power, the rated output power and the current energy efficiency, controlling the power battery to operate, and controlling the fuel cell to supply electric power at the rated output power or stop supplying electric power.

Optionally, in the method for managing energy of the fuel cell vehicle, the step of, according to at least one of the required power, the rated output power and the current energy efficiency, controlling the power battery to operate, and controlling the fuel cell to supply electric power at the rated output power or stop supplying electric power includes:
when the required power is greater than or equal to the rated output power, controlling the fuel cell to supply electric power to the motor at the rated output power, and controlling the power battery to supply electric power to the motor at a difference between the required power and the rated output power.

Optionally, in the method for managing energy of the fuel cell vehicle, the fuel cell is electrically connected to the power battery, and the step of, according to at least one of the required power, the rated output power and the current energy efficiency, controlling the power battery to operate, and controlling the fuel cell to supply electric power at the rated output power or stop supplying electric power further includes:
when the required power is greater than or equal to 0 and less than the rated output power, when the current energy efficiency is not within a preset energy-efficiency interval, controlling the fuel cell to supply electric power to the motor at the required power, and controlling the fuel cell to supply electric power to the power battery at a difference between the rated output power and the required power.

Optionally, in the method for managing energy of the fuel cell vehicle, the step of, according to at least one of the required power, the rated output power and the current energy efficiency, controlling the power battery to operate, and controlling the fuel cell to supply electric power at the rated output power or stop supplying electric power further includes:
when the required power is greater than or equal to 0 and less than the rated output power, when the current energy efficiency is within the preset energy-efficiency interval, controlling the fuel cell to stop supplying electric power, and controlling the power battery to supply electric power to the motor at the required power.

Optionally, in the method for managing energy of the fuel cell vehicle, the step of, according to at least one of the required power, the rated output power and the current energy efficiency, controlling the power battery to operate, and controlling the fuel cell to supply electric power at the rated output power or stop supplying electric power further includes:
when the required power is less than 0, controlling the fuel cell to stop supplying electric power, and controlling the power battery to be in a charging state.

Another object of the embodiments of the present disclosure is to provide a system for managing energy of a fuel cell vehicle, wherein the system is applied to a vehicle including a fuel cell, the vehicle further includes a power battery and a motor, the fuel cell and the power battery are electrically connected to the motor, and the system includes:
an acquiring module configured for acquiring a required power of the vehicle, a rated output power of the fuel cell and a current energy efficiency of the power battery; and
a controlling module configured for, according to at least one of the required power, the rated output power and the current energy efficiency, controlling the power battery to operate, and controlling the fuel cell to supply electric power at the rated output power or stop supplying electric power.

Optionally, in the system for managing energy of the fuel cell vehicle, the controlling module includes:
a first controlling unit configured for, when the required power is greater than or equal to the rated output power, controlling the fuel cell to supply electric power to the motor at the rated output power, and controlling the power battery to supply electric power to the motor at a difference between the required power and the rated output power.

Optionally, in the system for managing energy of the fuel cell vehicle, the controlling module further includes:
a second controlling unit configured for, when the required power is greater than or equal to 0 and less than the rated output power, when the current energy efficiency is not within a preset energy-efficiency interval, controlling the fuel cell to supply electric power to the motor at the required power, and controlling the fuel cell to supply electric power to the power battery at a difference between the rated output power and the required power.

Optionally, in the system for managing energy of a fuel cell vehicle, the controlling module further includes:
a third controlling unit configured for, when the required power is greater than or equal to 0 and less than the rated output power, when the current energy efficiency is within the preset energy-efficiency interval, controlling the fuel cell to stop supplying electric power, and controlling the power battery to supply electric power to the motor at the required power.

Optionally, in the system for managing energy of a fuel cell vehicle, the controlling module further includes:
a fourth controlling unit configured for, when the required power is less than 0, controlling the fuel cell to stop supplying electric power, and controlling the power battery to be in a charging state.

Yet another object of the present disclosure is to provide a vehicle, wherein the vehicle includes the fuel cell, the power battery and the motor, the fuel cell and the power battery are electrically connected to the motor, and the vehicle further includes the system for managing energy of the fuel cell vehicle stated above.

As compared with the prior art, the method and system for managing energy of a fuel cell vehicle and the vehicle according to the present disclosure have the following advantages:

Firstly, acquiring a required power of the vehicle, a rated output power of the fuel cell and a current energy efficiency of the power battery; and, subsequently, according to at least one of the required power, the rated output power and the current energy efficiency, controlling the power battery to operate, and controlling the fuel cell to supply electric power at the rated output power or stop supplying electric power. Because, on the precondition that the required power of the vehicle is satisfied, the power battery is controlled to operate at the current energy efficiency of the power battery, and the fuel cell is controlled to supply electric power at the rated output power or stop supplying electric power, not only the power battery can operate in the state of a reasonable energy efficiency to the largest extent, but also the fuel cell can always be in the two states of operating at the rated output power or of stopping operating, which prevents the problem that the fuel cell frequently operates at a non-rated output power, which results in a low economic efficiency of the hydrogen fuel and affects the economic efficiency of the entire vehicle.

The above description is merely a summary of the technical solutions of the present disclosure. In order to more clearly know the elements of the present disclosure to enable the implementation according to the contents of the description, and in order to make the above and other purposes, features and advantages of the present disclosure more apparent and understandable, the particular embodiments of the present disclosure are provided below.

### BRIEF DESCRIPTION OF THE DRAWINGS

In order to more clearly illustrate the technical solutions of the embodiments of the present disclosure or the related art, the figures that are required to describe the embodiments or the related art will be briefly introduced below. Apparently, the figures that are described below are embodiments of the present disclosure, and a person skilled in the art can obtain other figures according to these figures without paying creative work.

The drawings, which form part of the present disclosure, are intended to provide a further understanding of the present disclosure. The illustrative embodiments of the present disclosure and their explanation are intended to interpret the present disclosure, and do not inappropriately limit the present disclosure. In the drawings:
FIG. 1 is a schematic flow chart of the method for managing energy of a fuel cell vehicle according to an embodiment of the present disclosure;
FIG. 2 is a flow chart of the execution of the method for managing energy of a fuel cell vehicle according to an embodiment of the present disclosure;
FIG. 3 is a system-architecture diagram of the method for managing energy of a fuel cell vehicle according to an embodiment of the present disclosure;
FIG. 4 is a schematic structural diagram of the method for managing energy of a fuel cell vehicle according to an embodiment of the present disclosure;
FIG. 5 schematically shows a block diagram of a computing and processing device for implementing the method according to the present disclosure; and
FIG. 6 schematically shows a storage unit for maintaining or carrying a program code for implementing the method according to the present disclosure.

### DETAILED DESCRIPTION

The embodiments of the present disclosure will be described in further detail below with reference to the drawings. Although the drawings illustrate the embodiments of the present disclosure, it should be understood that the present disclosure may be implemented in various forms, which should not be limited by the embodiments illustrated herein. In contrast, the purpose of providing those embodiments is to more clearly understand the present disclosure, and to completely convey the scope of the present disclosure to a person skilled in the art.

It should be noted that, subject to the avoiding of any conflict, the embodiments and the features of the embodiments of the present disclosure may be combined.

The present disclosure will be described in detail below with reference to the drawings and the embodiments.

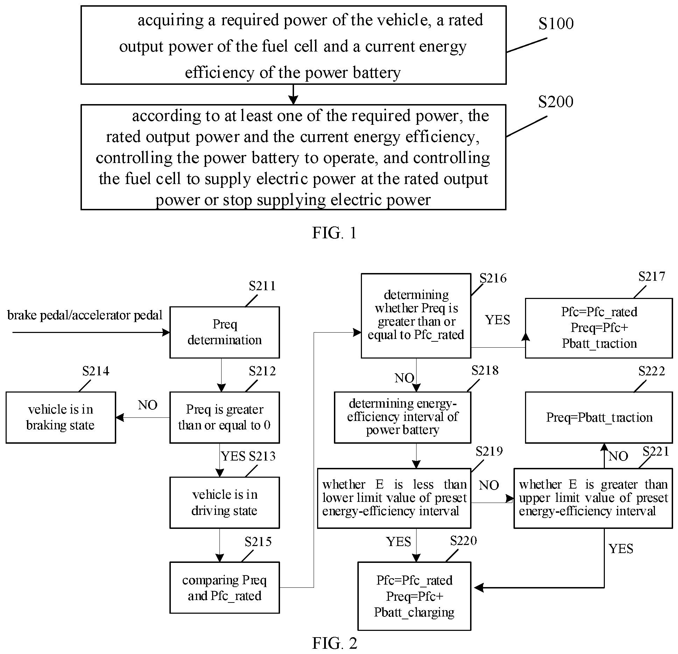

Referring to FIG. 1, FIG. 1 shows a schematic flow chart of the method for managing energy of a fuel cell vehicle according to an embodiment of the present disclosure. The method for managing energy of a fuel cell vehicle according to the embodiment of the present disclosure is applied to a vehicle including a fuel cell, the vehicle further includes a power battery and a motor, the fuel cell and the power battery are electrically connected to the motor, and the method includes the steps S100-S200.

In an embodiment of the present disclosure, the fuel cell and the power battery are electrically connected to the motor; in other words, the fuel cell and the power battery may supply energy to the motor, to drive the vehicle to travel. In practical applications, according to the power demand, the travelling state and the energy-consumption economic efficiency of the vehicle, it is required to determine that the motor is driven by the fuel cell and/or the power battery to rotate, or, in other words, determine the particular allocation of the energy for driving the motor to operate between the fuel cell and the power battery.

Step S 100: acquiring a required power of the vehicle, a rated output power of the fuel cell and a current energy efficiency of the power battery.

In the step S 100, the required power of the vehicle refers to the power that is required to be provided by the battery in order to satisfy the target operation state of the vehicle, and the required power may be determined by using the accelerator-pedal opening degree, the brake-pedal opening degree and the energy conversion efficiency of the motor. The rated output power is an inherent attribute of the fuel cell, and refers to the output power that may enable the fuel cell to be in the optimum operating state. The current energy efficiency refers to the energy efficiency of the power battery in the current state, and the energy efficiency may be determined by dividing the discharging energy of the power battery by the charging energy.

Step S200: according to at least one of the required power, the rated output power and the current energy efficiency, controlling the power battery to operate, and controlling the fuel cell to supply electric power at the rated output power or stop supplying electric power.

In the step S200, i.e., comprehensively taking into consideration the required power of the vehicle, the rated output power of the fuel cell and the current energy-efficiency state of the power battery, determining whether the power battery is required to operate and in what state the operation is performed, and controlling the fuel cell to output electric energy at the rated output power or stop outputting electric energy, i.e., controlling the fuel cell to operate at the rated output power or stop operating, i.e., in the embodiments of the present disclosure, the fuel cell has merely two states of stopping operating and operating at the rated output power, whereby the fuel cell, when operating, is always in the operating state of the rated output power, which does not only enable the operation state of the fuel cell to be better, but also can have a highest economic efficiency of the hydrogen fuel, thereby ensuring the economic efficiency of the energy of the entire vehicle.

As compared with the prior art, the method for managing energy of a fuel cell vehicle according to the present disclosure have the following advantages:

Firstly, acquiring a required power of the vehicle, a rated output power of the fuel cell and a current energy efficiency of the power battery; and, subsequently, according to at least one of the required power, the rated output power and the current energy efficiency, controlling the power battery to operate, and controlling the fuel cell to supply electric power at the rated output power or stop supplying electric power. Because, on the precondition that the required power of the vehicle is satisfied, the power battery is controlled to operate at the current energy efficiency of the power battery, and the fuel cell is controlled to supply electric power at the rated output power or stop supplying electric power, not only the power battery can operate in the state of a reasonable energy efficiency to the largest extent, but also the fuel cell can always be in the two states of operating at the rated output power or of stopping operating, which prevents the problem that the fuel cell frequently operates at a non-rated output power, which results in a low economic efficiency of the hydrogen fuel and affects the economic efficiency of the entire vehicle.

In practical applications, in the step S 100, the step of acquiring the required power of the vehicle particularly includes the steps S101-S102:

Step S101: acquiring a target power of the vehicle.

In the step S101, the target power refers to the power that is required to be provided by the motor in order to satisfy the target operation state of the vehicle, and the target power may be determined directly according to the accelerator-pedal opening degree and the brake-pedal opening degree.

Step S102: according to the target power and an motor efficiency of the motor, determining the required power.

In the step S102, because, when the motor cannot convert the electric energy inputted into the motor into kinetic energy, there is an energy loss, the ratio of the inputted electric energy that is consumed by the motor to the energy that is converted into mechanical kinetic energy is expressed as the motor efficiency, and, therefore, by dividing the target power of the vehicle by the motor efficiency of the motor, the required power that the battery is required to input into the motor and is used to drive the motor to rotate can be obtained, wherein the required power may enable the output power of the battery to exactly satisfy the power demand of the vehicle.

In the present embodiment, in order to reach the target operation state of the vehicle, by comprehensively taking into consideration the required power of the motor, the rated output power of the fuel cell and the current energy-efficiency state of the power battery are required to be input by the battery, to determine whether the power battery is required to operate and in what state the operation is performed, and controlling the fuel cell to output electric energy at the rated output power or stop outputting electric energy, not only the power demand of the vehicle can be satisfied, but also the fuel cell can be controlled to operate at the rated output power or stop operating, whereby the fuel cell, when operating, is always in the operating state of the rated output power, which does not only enable the operation state of the fuel cell to be better, but also can have a highest economic efficiency of the hydrogen fuel, thereby ensuring the economic efficiency of the energy of the entire vehicle.

Optionally, in an embodiment, the step S200 includes the step S201:

Step S201: when the required power is greater than or equal to the rated output power, controlling the fuel cell to supply electric power to the motor at the rated output power, and controlling the power battery to supply electric power to the motor at a difference between the required power and the rated output power.

In the step S201, when the required power, i.e., the power that is required to be input into the motor by the battery, is greater than the rated output power of the fuel cell, that indicates that the electric-energy outputting by the fuel cell at the rated output power still cannot satisfy the power demand of the vehicle, therefore, the fuel cell is controlled to supply electric power to the motor at its rated output power, and, at the same time, the power battery is controlled to supply electric power to the motor at the difference between the required power of the motor and the rated output power of the fuel cell. In other words, the power battery compensates for the difference between the required power of the motor and the rated output power of the fuel cell. In this way, not only the power demand of the vehicle may be satisfied, but also the fuel cell may maintain the power of the state of the rated output power, which cannot only realize an excellent economic efficiency of the hydrogen fuel, but also can protect the fuel cell, to prevent shortening of its service life caused by operation in the state exceeding the rated output power for a long time.

Moreover, when the required power is equal to the rated output power of the fuel cell, that indicates that the electric-energy output by the fuel cell at the rated output power can exactly satisfy the power demand of the vehicle, and, therefore, the fuel cell is controlled to supply electric power to the motor at its rated output power. In this case, because the difference between the required power of the motor and the rated output power of the fuel cell is 0, the power battery is no longer required to supply electric power to the motor.

Optionally, in an embodiment, the fuel cell is electrically connected to the power battery, and the step S200 further includes the step S202.

Step S202: when the required power is greater than or equal to 0 and less than the rated output power, when the current energy efficiency is not within a preset energy-efficiency interval, controlling the fuel cell to supply electric power to the motor at the required power, and controlling the fuel cell to supply electric power to the power battery at a difference between the rated output power and the required power.

In the step S202, the preset energy-efficiency interval refers to an energy-efficiency interval that is determined in advance according to the battery characteristics of the power battery. The preset energy-efficiency interval is an energy-efficiency interval that the characteristics of the power battery itself and the energy conversion efficiency are comprehensively taken into consideration, and when the current energy efficiency of the power battery is within the range of the preset energy-efficiency interval, not only an electric-energy conversion efficiency may be obtained, but also the power battery may be in an excellent operation state, to prolong the service life of the power battery.

In the present embodiment, the fuel cell is electrically connected to the power battery, and the power battery has the function of charging. Therefore, the fuel cell can be used to charge the power battery. When the required power of the motor is greater than or equal to 0 and less than the rated output power, that indicates that, if the fuel cell supplies electric power at the rated output power, the power output by the fuel cell exceeds the demand of the vehicle. In this case, if the current energy efficiency of the power battery is not within the preset energy-efficiency interval, that indicates that the energy conversion efficiency of the current operation of the motor driven by using the power battery is not high, the energy-consumption economic efficiency is not good and the operation state of the power battery is not good. Therefore, the fuel cell is controlled to supply electric power to the motor at the required power, and the fuel cell is controlled to supply electric power to the power battery at the difference between rated output power of the fuel cell and the required power mentioned above, whereby the fuel cell can still output electric energy at the rated output power.

In practical applications, in the step S202, when the fuel cell is controlled to supply electric power to the power battery at the difference between the rated output power and the required power, the current electricity-loading state value of the power battery should also be taken into consideration. When the current electricity-loading state value is greater than a maximum electricity-loading state value of the power battery, the fuel cell is controlled to stop supplying electric power to the power battery at the difference between the rated output power and the required power, to prevent damaging the power battery due to overcharge.

Optionally, in an embodiment, the step S200 further includes the step S203:

Step S203: when the required power is greater than or equal to 0 and less than the rated output power, the vehicle has a low required power, when the current energy efficiency is within the preset energy-efficiency interval, controlling the fuel cell to stop supplying electric power, and controlling the power battery to supply electric power to the motor at the required power.

In the present embodiment, when the required power of the motor is greater than or equal to 0 and less than the rated output power, that indicates that the motor requires the battery to supply electric power, and when the fuel cell supplies electric power at the rated output power, the power output by the fuel cell exceeds the demand of the vehicle. In this case, if the current energy efficiency of the power battery is within the preset energy-efficiency interval, that indicates that the current operation of the motor driven by using the power battery has a high energy conversion efficiency, a good energy economic efficiency can be obtained, and the power battery can operate at a good operation state. Therefore, the fuel cell is controlled to stop supplying electric power, and the power battery is controlled to supply electric power to the motor at the required power of the motor. In other words, the power battery directly supplies electric power to the motor to satisfy the usage demand of the vehicle, and the fuel cell is no longer required to output electric energy, and thus is controlled to stop supplying electric power. Such a controlling mode does not only enable the power battery to operate within the optimum energy-efficiency interval to the greatest extent, but also enables the fuel cell not to be required to operate at a non-rated output power at a same time, which does not only optimize the energy allocation strategy of the entire vehicle, but also ensures the economic efficiency of the entire vehicle.

In practical applications, in the step S203, when the power battery is controlled to supply electric power to the motor at the required power, the current electricity-loading state value of the power battery should also be taken into consideration. When the current electricity-loading state value is less than a minimum electricity-loading state value of the power battery, the power battery is controlled to stop supplying electric power to the motor at the required power, to prevent damaging the power battery due to over discharge.

Optionally, in an embodiment, the method for managing energy of the fuel cell vehicle according to the embodiment of the present disclosure further includes the step S300:

Step S300: when the required power is less than 0, controlling the fuel cell to stop supplying electric power, and controlling the power battery to be in a charging state.

In the present embodiment, the vehicle refers to a vehicle that has the function of energy recovery. In other words, the motor can rotate by the driving by the power battery and/or the fuel cell, to drive the vehicle to travel. When the vehicle requires decelerating and braking, the motor may also electromagnetically convert part of the kinetic energy of the vehicle into electric energy and charge the power battery, to store the converted electric energy into the power battery, thereby realizing the energy recovery. The power battery is not only used to supply electric power to the motor and the other electricity consuming components of the vehicle, but is also used to store the electric energy generated when the motor performs energy recovery.

When the motor electromagnetically converts part of the kinetic energy when the vehicle brakes or decelerates and stores it in the power battery, a certain braking resistance may be generated on the motor, to be used for the process of the deceleration and braking of the vehicle. The direction of the braking resistance is opposite to the rotation direction of the motor, and therefore the vehicle may be braked or decelerated.

In the present embodiment, when the required power of the vehicle is less than 0, that indicates that the vehicle is in the braking state or the deceleration state, the power battery or the fuel cell is not required to supply electric power, and the function of energy recovery has been started up. Therefore, the fuel cell is controlled to stop supplying electric power, and the power battery is controlled to be in the charging state, to store the electric energy generated by energy recovery during the vehicle being braked or decelerated.

In practical applications, referring to FIG. 2, FIG. 2 shows a flow chart of the execution of the method for managing energy of a fuel cell vehicle according to an embodiment of the present disclosure.

As shown in FIG. 2, in the step S211, firstly, determining the required power of the vehicle by using the opening degree of the brake pedal and/or the opening degree of the accelerator pedal, subsequently determining the required power (Preq) of the motor, and subsequently entering the step S212;
in the step S212, determining whether the required power of the vehicle is greater than or equal to 0, if it is determined that the required power of the vehicle is greater than or equal to 0, then entering the step S213, and if it is determined that the required power of the vehicle is less than 0, then entering the step S214;
in the step S213, determining that the vehicle is in the driving state, or, in other words, the battery is required to supply electric power to the motor, and subsequently entering the step S215;
in the step S214, determining that the vehicle is in the braking state, or, in other words, the fuel cell and the power battery are not required to supply electric power to the motor, and controlling the power battery to be in the charging state to recover energy;
in the step S215, comparing the required power and the rated output power (Pfc_rated) of the fuel cell, and subsequently entering the step S216;
in the step S216, if the required power is greater than or equal to the rated output power of the fuel cell, then entering the step S217, controlling a first practical output power (Pfc) of the fuel cell to be the rated output power of the fuel cell, and controlling a second practical output power (Pbatt_traction) of the power battery to be the difference between the required power and the rated output power of the fuel cell;
in the step S216, if the required power is less than the rated output power of the fuel cell, then entering the step S218, and determining the energy-efficiency interval of the power battery, to determine whether the current energy efficiency (E) of the power battery is within the range of the preset energy-efficiency interval;
in the step S219, determining whether the current energy efficiency of the power battery is less than a lower limit value of the preset energy-efficiency interval, and if the current energy efficiency of the power battery is less than a lower limit value of the preset energy-efficiency interval, then entering the step S220, controlling the practical output power of the fuel cell to be the rated output power of the fuel cell, and controlling to charge the power battery, wherein the charging power (Pbatt_charging) of the power battery is the difference between the rated output power and the required power of the fuel cell;
in the step S219, if it is determined that the current energy efficiency of the power battery is not less than the lower limit value of the preset energy-efficiency interval, then entering the step S221;
in the step S221, determining whether the current energy efficiency of the power battery is greater than an upper limit value of the preset energy-efficiency interval, and if the current energy efficiency of the power battery is greater than the upper limit value of the preset energy-efficiency interval, then entering the step S222; and
in the step S222, if the current energy efficiency of the power battery is not greater than the upper limit value of the preset energy-efficiency interval, then controlling the power battery to supply electric power to the motor, i.e., controlling the second practical output power of the power battery to be the required power.

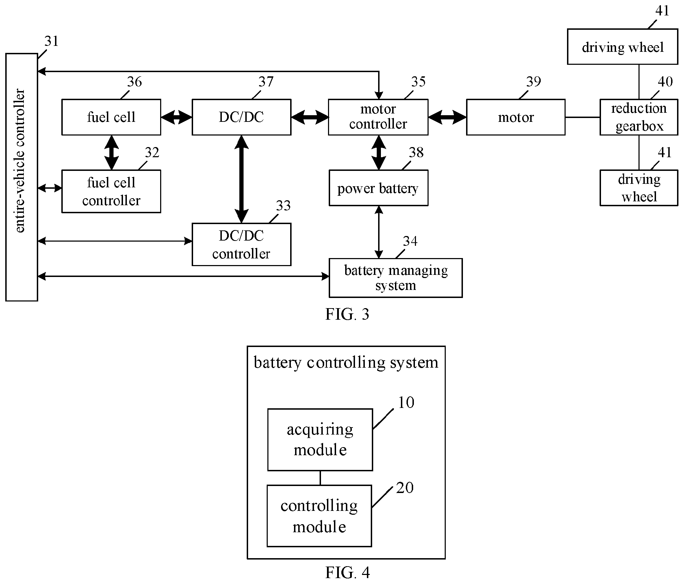

In practical applications, referring to FIG. 3, FIG. 3 shows a system-architecture diagram of the method for managing energy of a fuel cell vehicle according to an embodiment of the present disclosure. As shown in FIG. 3, the controlling method is performed jointly by an entire-vehicle controller 31, a fuel cell controller 32, a DC/DC controller 33, a battery managing system 34, an motor controller 35, a fuel cell 36, a high-voltage-direct-current-to-low-voltage-direct-current converter (DC/DC) 37, a power battery 38, a motor 39, a reduction gearbox 40 and a driving wheel 41.

All of the fuel cell controller 32, the DC/DC controller 33, the battery managing system 34 and the motor controller 35 are communicatively connected to the entire-vehicle controller 31, and the battery managing system 34 is communicatively connected to the power battery 38.

The fuel cell controller 32 is electrically connected to the fuel cell 36, and therefore the fuel cell 36 may be controlled to output electric energy at the rated output power or stop outputting electric energy by using the fuel cell controller 32. The fuel cell 36 and the DC/DC controller 33 are electrically connected to the high-voltage-direct-current-to-low-voltage-direct-current converter 37. The high-voltage-direct-current-to-low-voltage-direct-current converter 37, the power battery 38 and the motor 39 are electrically connected to the motor controller 35. Therefore, it can be realized to supply electric power to the motor 39 at the required power of the motor 39, and, according to the required power, the rated output power of the fuel cell 36 and the current energy efficiency of the power battery 38, control the power battery to operate, and control the fuel cell 36 to supply electric power at the rated output power or stop supplying electric power.

The motor 39 and the driving wheel are mechanically connected to the reduction gearbox 40, to, by using the motor 39, via the reduction gearbox 40, drive the driving wheel 41 to rotate, thereby realizing controlling the operation of the vehicle.

Another object of the present disclosure is to provide a system for managing energy of a fuel cell vehicle, wherein the system is applied to a vehicle including a fuel cell, the vehicle further includes a power battery and a motor, and the fuel cell and the power battery are electrically connected to the motor. Referring to FIG. 4, FIG. 4 shows a schematic structural diagram of the method for managing energy of a fuel cell vehicle according to an embodiment of the present disclosure. The system includes:
an acquiring module 10 configured for acquiring a required power of the vehicle, a rated output power of the fuel cell and a current energy efficiency of the power battery; and
a controlling module 20 configured for, according to at least one of the required power, the rated output power and the current energy efficiency, controlling the power battery to operate, and controlling the fuel cell to supply electric power at the rated output power or stop supplying electric power.

According to the embodiments of the present disclosure, by using the acquiring module 10, the system firstly acquires a required power of the vehicle, a rated output power of the fuel cell and a current energy efficiency of the power battery; and, subsequently, by using the controlling module 20, according to at least one of the required power, the rated output power and the current energy efficiency, controls the power battery to operate, and controls the fuel cell to supply electric power at the rated output power or stop supplying electric power. Because, on the precondition that the required power of the vehicle is satisfied, the power battery is controlled to operate at the current energy efficiency of the power battery, and the fuel cell is controlled to supply electric power at the rated output power or stop supplying electric power, not only the power battery may operate in the state of a reasonable energy efficiency to the largest extent, but also the fuel cell may always be in the two states of operating at the rated output power or of stopping operating, which prevents the problem that the fuel cell frequently operates at a non-rated output power, which results in a low economic efficiency of the hydrogen fuel and affects the economic efficiency of the entire vehicle.

Optionally, in the system for managing energy of the fuel cell vehicle, the controlling module 20 includes:
a first controlling unit configured for, when the required power is greater than or equal to the rated output power, controlling the fuel cell to supply electric power to the motor at the rated output power, and controlling the power battery to supply electric power to the motor at a difference between the required power and the rated output power.

Optionally, in the system for managing energy of the fuel cell vehicle, the controlling module 20 further includes:
a second controlling unit configured for, when the required power is greater than or equal to 0 and less than the rated output power, when the current energy efficiency is not within a preset energy-efficiency interval, controlling the fuel cell to supply electric power to the motor at the required power, and controlling the fuel cell to supply electric power to the power battery at a difference between the rated output power and the required power.

Optionally, in the system for managing energy of the fuel cell vehicle, the controlling module 20 further includes:
a third controlling unit configured for, when the required power is greater than or equal to 0 and less than the rated output power, when the current energy efficiency is within the preset energy-efficiency interval, controlling the fuel cell to stop supplying electric power, and controlling the power battery to supply electric power to the motor at the required power.

Optionally, in the system for managing energy of the fuel cell vehicle, the controlling module 20 further includes:
a fourth controlling unit configured for, when the required power is less than 0, controlling the fuel cell to stop supplying electric power, and controlling the power battery to be in a charging state.

Yet another object of the present disclosure is to provide a vehicle, wherein the vehicle includes a fuel cell, a power battery and a motor, the fuel cell and the power battery are electrically connected to the motor, and the vehicle further includes the system for managing energy of a fuel cell vehicle stated above.

The system for managing energy of a fuel cell vehicle and the vehicle have the same advantages as those of the above method for managing energy of a fuel cell vehicle over the prior art, which is not discussed herein further.

In conclusion, in the method and system for managing energy of a fuel cell vehicle and the vehicle according to the present disclosure, firstly, acquiring a required power of the vehicle, a rated output power of the fuel cell and a current energy efficiency of the power battery; and, subsequently, according to at least one of the required power, the rated output power and the current energy efficiency, controlling the power battery to operate, and controlling the fuel cell to supply electric power at the rated output power or stop supplying electric power. Because, on the precondition that the required power of the vehicle is satisfied, the power battery is controlled to operate at the current energy efficiency of the power battery, and the fuel cell is controlled to supply electric power at the rated output power or stop supplying electric power, not only the power battery can operate in the state of a reasonable energy efficiency to the largest extent, but also the fuel cell can always be in the two states of operating at the rated output power or of stopping operating, which prevents the problem that the fuel cell frequently operates at a non-rated output power, which results in a low economic efficiency of the hydrogen fuel and affects the economic efficiency of the entire vehicle.

A person skilled in the art can clearly understand that, in order for the convenience and concision of the description, the particular working processes of the above-described systems, devices and units may refer to the corresponding processes according to the above-described process embodiments, and are not discussed herein further.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Some or all of the modules may be selected according to the actual demands to realize the purposes of the solutions of the embodiments. A person skilled in the art can understand and implement the technical solutions without paying creative work.

Each component embodiment of the present disclosure may be implemented by hardware, or by software modules that are operated on one or more processors, or by a combination thereof. A person skilled in the art should understand that some or all of the functions of some or all of the components of the computing and processing device according to the embodiments of the present disclosure may be implemented by using a microprocessor or a digital signal processor (DSP) in practice. The present disclosure may also be implemented as apparatus or device programs (for example, computer programs and computer program products) for implementing part of or the whole of the method described herein. Such programs for implementing the present disclosure may be stored in a computer-readable medium, or may be in the form of one or more signals. Such signals may be downloaded from an Internet website, or provided on a carrier signal, or provided in any other forms.

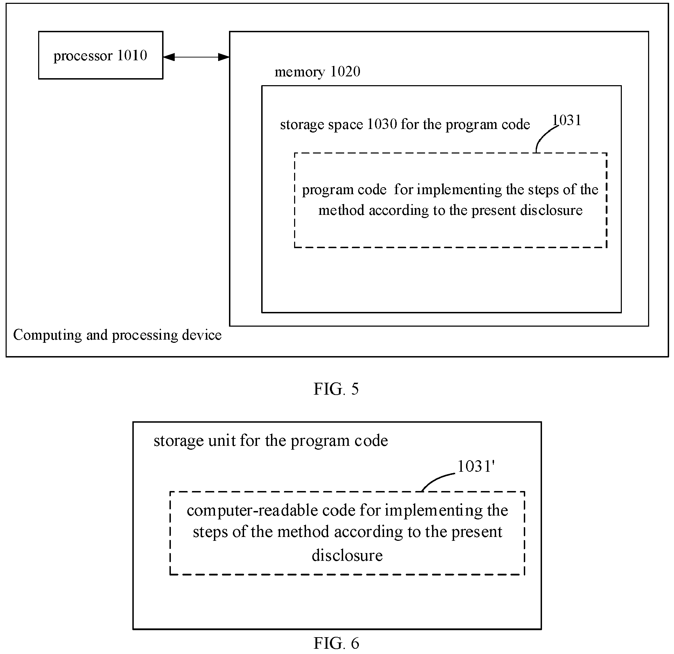

For example, FIG. 5 shows a computing and processing device that can implement the method according to the present disclosure. The computing and processing device traditionally includes a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 6. The storage unit may have storage segments or storage spaces with similar arrangement to the memory 1020 of the computing and processing device in FIG. 5. The program codes may, for example, be compressed in a suitable form. Generally, the storage unit contains a computer-readable code 1031', which can be read by a processor like 1010. When those codes are executed by the computing and processing device, the codes cause the computing and processing device to implement each of the steps of the method described above.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same one embodiment.

The description provided herein describes many concrete details. However, it can be understood that the embodiments of the present disclosure may be implemented without those concrete details. In some of the embodiments, well-known processes, structures and techniques are not described in detail, so as not to affect the understanding of the description.

In the claims, any reference signs between parentheses should not be construed as limiting the claims. The word "comprise" does not exclude elements or steps that are not listed in the claims. The word "a" or "an" preceding an element does not exclude the existing of a plurality of such elements. The present disclosure may be implemented by means of hardware comprising several different elements and by means of a properly programmed computer. In unit claims that list several devices, some of those devices may be embodied by the same item of hardware. The words first, second, third and so on do not denote any order. Those words may be interpreted as names.

Finally, it should be noted that the above embodiments are merely intended to explain the technical solutions of the present disclosure, and not to limit them. Although the present disclosure is explained in detail with reference to the above embodiments, a person skilled in the art should understand that he can still modify the technical solutions set forth by the above embodiments, or make equivalent substitutions to part of the technical features of them. However, those modifications or substitutions do not make the essence of the corresponding technical solutions depart from the spirit and scope of the technical solutions of the embodiments of the present disclosure.

## Claims

1. A method for managing energy of a fuel cell vehicle, wherein the method is applied to a vehicle comprising a fuel cell, the vehicle further comprises a power battery and a motor, the fuel cell and the power battery are electrically connected to the motor, and the method comprises:
acquiring a required power of the vehicle, a rated output power of the fuel cell and a current energy efficiency of the power battery; and
according to at least one of the required power, the rated output power and the current energy efficiency, controlling the power battery to operate, and controlling the fuel cell to supply electric power at the rated output power or stop supplying electric power.

2. The method for managing energy of the fuel cell vehicle according to claim 1, wherein the step of, according to at least one of the required power, the rated output power and the current energy efficiency, controlling the power battery to operate, and controlling the fuel cell to supply electric power at the rated output power or stop supplying electric power comprises:
when the required power is greater than or equal to the rated output power, controlling the fuel cell to supply electric power to the motor at the rated output power, and controlling the power battery to supply electric power to the motor at a difference between the required power and the rated output power.

3. The method for managing energy of the fuel cell vehicle according to claim 1 or 2, wherein the fuel cell is electrically connected to the power battery, and the step of, according to at least one of the required power, the rated output power and the current energy efficiency, controlling the power battery to operate, and controlling the fuel cell to supply electric power at the rated output power or stop supplying electric power further comprises:
when the required power is greater than or equal to 0 and less than the rated output power, when the current energy efficiency is not within a preset energy-efficiency interval, controlling the fuel cell to supply electric power to the motor at the required power, and controlling the fuel cell to supply electric power to the power battery at a difference between the rated output power and the required power.

4. The method for managing energy of the fuel cell vehicle according to claim 3, wherein the step of, according to at least one of the required power, the rated output power and the current energy efficiency, controlling the power battery to operate, and controlling the fuel cell to supply electric power at the rated output power or stop supplying electric power further comprises:
when the required power is greater than or equal to 0 and less than the rated output power, when the current energy efficiency is within the preset energy-efficiency interval, controlling the fuel cell to stop supplying electric power, and controlling the power battery to supply electric power to the motor at the required power.

5. The method for managing energy of the fuel cell vehicle according to any one of claims 1 to 4, wherein the step of, according to at least one of the required power, the rated output power and the current energy efficiency, controlling the power battery to operate, and controlling the fuel cell to supply electric power at the rated output power or stop supplying electric power further comprises:
when the required power is less than 0, controlling the fuel cell to stop supplying electric power, and controlling the power battery to be in a charging state.

6. The method for managing energy of the fuel cell vehicle according to any one of claims 1 to 5, wherein the step of acquiring the required power of the vehicle comprises:
acquiring a target power of the vehicle; and
according to the target power and a motor efficiency of the motor, determining the required power.

7. A system for managing energy of a fuel cell vehicle, wherein the system is applied to a vehicle comprising a fuel cell, the vehicle further comprises a power battery and a motor, the fuel cell and the power battery are electrically connected to the motor, and the system comprises:
an acquiring module configured for acquiring a required power of the vehicle, a rated output power of the fuel cell and a current energy efficiency of the power battery; and
a controlling module configured for, according to at least one of the required power, the rated output power and the current energy efficiency, controlling the power battery to operate, and controlling the fuel cell to supply electric power at the rated output power or stop supplying electric power.

8. The system for managing energy of the fuel cell vehicle according to claim 7, wherein the controlling module comprises:
a first controlling unit configured for, when the required power is greater than or equal to the rated output power, controlling the fuel cell to supply electric power to the motor at the rated output power, and controlling the power battery to supply electric power to the motor at a difference between the required power and the rated output power.

9. The system for managing energy of the fuel cell vehicle according to claim 7 or 8, wherein the controlling module further comprises:
a second controlling unit configured for, when the required power is greater than or equal to 0 and less than the rated output power, when the current energy efficiency is not within a preset energy-efficiency interval, controlling the fuel cell to supply electric power to the motor at the required power, and controlling the fuel cell to supply electric power to the power battery at a difference between the rated output power and the required power.

10. The system for managing energy of the fuel cell vehicle according to claim 9, wherein the controlling module further comprises:
a third controlling unit configured for, when the required power is greater than or equal to 0 and less than the rated output power, when the current energy efficiency is within the preset energy-efficiency interval, controlling the fuel cell to stop supplying electric power, and controlling the power battery to supply electric power to the motor at the required power.

11. The system for managing energy of the fuel cell vehicle according to any one of claims 7 to 10, wherein the controlling module further comprises:
a fourth controlling unit configured for, when the required power is less than 0, controlling the fuel cell to stop supplying electric power, and controlling the power battery to be in a charging state.

12. A vehicle, wherein the vehicle comprises the fuel cell, the power battery and the motor, the fuel cell and the power battery are electrically connected to the motor, and the vehicle further comprises the system for managing energy of the fuel cell vehicle according to any one of claims 7-11.

13. A computing and processing device, wherein the computing and processing device comprises:
a memory storing a computer-readable code; and
one or more processors, wherein when the computer-readable code is executed by the one or more processors, the computing and processing device implements the method for managing energy of a fuel cell vehicle according to any one of claims 1-6.

14. A computer program, wherein the computer program comprises a computer-readable code, and when the computer-readable code is executed in a computing and processing device, the computer-readable code causes the computing and processing device to implement the method for managing energy of a fuel cell vehicle according to any one of claims 1-6.

15. A computer-readable medium, wherein the computer-readable medium stores the computer program according to claim 14.
